# EUROPÄISCHE PATENTSCHRIFT

(11) **EP 1 993 463 B1**
(45) Veröffentlichungstag und Bekanntmachung des Hinweises auf die Patenterteilung: **28.02.2018**
(21) Anmeldenummer: 07711832.1
(22) Anmeldetag: 07.03.2007
(51) Int. Cl.: A61C 1/06, A61C 1/12

(54) **ZAHNÄRZTLICHES, ZAHNMEDIZINISCHES ODER DENTALTECHNISCHES HANDSTÜCK MIT ELEKTROMOTOR**
HANDPIECE FOR DENTISTS, DENTAL SURGEONS, OR DENTAL TECHNICIANS, COMPRISING AN ELECTRIC MOTOR
PIÈCE À MAIN DE DENTISTERIE COMPORTANT UN MOTEUR ÉLECTRIQUE

(30) Priorität: 09.03.2006 DE 102006010976; 31.10.2006 DE 102006051510
(43) Veröffentlichungstag der Anmeldung: 26.11.2008
(73) Patentinhaber: Kaltenbach & Voigt GmbH, 88400 Biberach (DE)
(72) Erfinder: GUGEL, Bernd, 89079 Ulm-Einsingen (DE); KUHN, Bernhard, 88400 Biberach (DE)
(74) Vertreter: Thun, Clemens
(86) Internationale Anmeldenummer: PCT/EP2007/001967
(87) Internationale Veröffentlichungsnummer: WO 2007/101680

(56) Entgegenhaltungen:
- DE-A1- 4 329 181
- DE-A1- 10 135 155
- DE-A1- 10 161 945
- DE-U1- 9 315 428
- GB-A- 2 118 838
- GB-A- 2 371 488
- US-A- 4 486 176
- US-A1- 2005 116 578

## Beschreibung

Die vorliegende Erfindung betrifft ein zahnärztliches, zahnmedizinisches oder dentaltechnisches Handstück gemäß dem Oberbegriff des Anspruchs 1, welches einen Elektromotor zum Antreiben eines von einer Werkzeugaufnahme des Handstücks gehaltenen Werkzeugs, insbesondere eines zahnärztlichen Bohrers aufweist.

Zahnärztliche oder zahnmedizinische Handstücke umfassen üblicherweise einen Instrumentenabschnitt zur Aufnahme eines rotierenden dentalen Werkzeugs, zum Beispiel eines Bohrers, einen Antriebsmotor zum Antreiben des dentalen Werkzeugs und einen Schlauchabschnitt mit einem Medien-Zuführschlauch zum Zuführen von bestimmten Versorgungsmedien für den Betrieb des Handstücks. Hierunter fallen zum Beispiel Strom zum Betreiben eines Elektromotors und/oder einer Lichtquelle aber auch Kühlmedien wie Luft und Wasser.

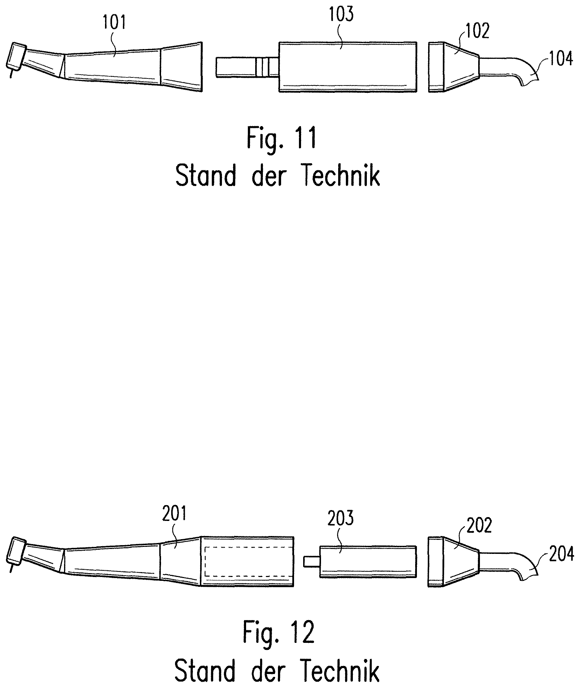

Die Figuren 11 und 12 zeigen Handstücke gemäß dem Stand der Technik, welche in unterschiedlicher Weise ausgestaltet sind. Wie Figur 11 zeigt, können der Instrumentenabschnitt 101, der Antriebsmotor 103 und der Schlauchabschnitt 102 mit dem Medien-Zuführschlauch 104 als Einzelkomponenten ausgestaltet sein, die dann durch Aufstecken direkt hintereinander gekoppelt werden. Dieser Aufbau weist also drei Koppelstellen zwischen dem Instrumentenabschnitt 101 und dem Schlauchabschnitt 102 sowie jeweils zwischen dem Antriebsmotor 103 und den beiden Abschnitten 101 und 102 auf. Ein derartiger Aufbau für ein Handstück ist beispielsweise aus der DE 28 34 099 C2 oder der EP 0 012 871 B1 bekannt.

Eine hierzu alternative Aufbauart für ein zahnärztliches oder zahnmedizinisches Handstück ist in Figur 12 dargestellt. Bei dem Antriebsmotor 203 handelt es sich nunmehr um eine sog. Motorpatrone, die in einem von dem Instrumentenabschnitt 201 und dem Schlauchabschnitt 202 gebildeten Hohlraum gehalten wird. Der Instrumentenabschnitt besitzt zu diesem Zweck ein den Antriebsmotor 203 überlappendes Gehäuse mit integrierten Versorgungsleitungen für die Aufnahme der von dem Medien-Zuführschlauch zugeführten Versorgungsmedien, wobei das Gehäuse und die Versorgungsleitungen des Instrumentenabschnittes 201 bis zu dem Schlauchabschnitt 202 geführt sind.

Diese zwei bekannten Aufbauarten sind in mehrfacher Hinsicht problematisch. So ist beispielsweise durch die bauartbedingte große Baulänge und das relativ hohe Gewicht des dentalen Handstückes die Handhabung erschwert, da der Schwerpunkt zur Schlauchseite hin verlagert ist. Gerade für zahnärztliche Arbeiten ist jedoch eine feinfühlige und leichte Handhabung erforderlich. Ferner sind die vielen Koppel- bzw. Trennstellen zwischen den Komponenten des Handstücks bezüglich der Hygieneanforderungen kritisch.

Um diese Problematik zu umgehen, wurde dementsprechend in der EP 0 888 091 A1 ein neuartiges Konzept vorgeschlagen, bei dem sowohl das Handstück als auch der Motor in zwei Komponenten unterteilt sind. Ein erster Abschnitt des Handstücks dient dabei zur Aufnahme eines dentalen Werkzeuges und ist mit einem zweiten Abschnitt, an den eine Medien-Zuführleitung zur Zufuhr bestimmter Versorgungsmedien für den Betrieb des Werkzeugs anschließbar ist, lösbar koppelbar. Der Antriebsmotor wiederum ist in einen rotierenden Bereich und einen statischen Bereich mit einer Statorwicklung unterteilt, wobei beide Teile jeweils in den beiden Abschnitten des Handstücks derart angeordnet sind, dass durch Zusammenfügen des ersten und zweiten Handstückabschnittes der statische Bereich des Antriebsmotors mit der Statorwicklung über den rotierenden Bereich des Antriebsmotors geschoben wird. Auf diese Weise können einerseits die Baulänge des Handstücks und andererseits die Anzahl der Schnittstellen im Vergleich zu den in den Fig. 11 und 12 dargestellten Konzepten reduziert werden.

Die DE 43 29 181 A1 zeigt eine Antriebsvorrichtung für einen zahnärztlichen Werkzeughalter, die einen Antriebs-Übertragungsmechanismus zum Drehen eines zahnärztlichen Schneidwerkzeugs umfasst.

Dokument US 4 486 176 offenbart ein dentales Handstück mit einer geschlossenen Griffhülse, wobei das Handstück ferner einen kollektorlosen Elektromotor aufweist, wobei der Elektromotor vollständig in die Griffhülse integriert ist, derart, dass er mit der Griffhülse (2) eine Einheit bildet.

Dokument GB 2 118 838 offenbart ein zahnärztliches Handstück, mit einer länglichen abgewinkelten Griffhülse, mit an deren hinteren Ende angeordneten Kupplungselementen zum Anschließen an einen Versorgungsschlauch. Das Handstück enthält einen Elektromotor und eine Motorwelle.

Der vorliegenden Erfindung liegt die Aufgabe zu Grunde, ein weiter verbessertes Konzept für ein zahnärztliches, zahnmedizinisches oder dentaltechnisches Handstück anzugeben, welches im Vergleich zu den bekannten Ausführungsformen nochmals kompakter gehalten werden kann und eine weiter verbesserte Handhabung ermöglicht.

Die Aufgabe wird durch ein zahnärztliches, zahnmedizinisches oder dentaltechnisches Handstück mit den Merkmalen des Anspruchs 1 gelöst. Vorteilhafte Weiterbildungen der Erfindung sind Gegenstand der Unteransprüche.

Die erfindungsgemäße Lösung beruht auf der Nutzung neuartiger Elektromotoren, welche im Vergleich zu früheren Ausführungsformen deutlich kompakter ausgestaltet und dennoch leistungsfähig sind. Es wird nunmehr vorgeschlagen, zum Betrieb eines zahnärztlichen oder zahnmedizinischen Handstücks einen derartigen Elektromotor, bei dem es sich um einen sog. kollektor- bzw. bürstenlosen Motor mit einem Permanentmagnetrotor handelt, einzusetzen und diesen vollständig in eine längliche Griffhülse des Handstücks zu integrieren.

Gemäß der vorliegenden Erfindung wird also ein zahnärztliches, zahnmedizinisches oder dentaltechnisches Handstück vorgeschlagen, welches eine längliche, vorzugsweise abgewinkelte Griffhülse aufweist, an deren hinteren Ende Kupplungselemente zum Anschließen des Handstücks an einen mit einer zahnärztlichen Versorgungseinrichtung zu verbindenden Versorgungsschlauch vorgesehen sind und an deren vorderen Ende ein Kopfbereich mit einer Werkzeugaufnahme zur Halterung eines in Rotation zu versetzenden Werkzeugs angeordnet ist. Das Handstück weist ferner einen Elektromotor zum Antreiben eines von der Werkzeugaufnahme gehaltenen Werkzeugs auf, wobei vorgesehen ist, dass der Elektromotor vollständig in die Griffhülse integriert ist, so dass er mit dieser eine Einheit bildet. Die Werkzeugaufnahme ist mit dem Motor über eine Welle verbunden, welche sich durch den vorderen Bereich der Griffhülse erstreckt, wobei die Welle an ihrem vorderen Ende mit der Werkzeugaufnahme über ein Kopfgetriebe und an ihrem hinteren Ende über ein Kniegetriebe mit einer Motorwelle gekoppelt ist. Die Griffhülse ist hierbei einstückig ausgebildet oder besteht aus mehreren Teilen, welche für einen Anwender des Handstücks nicht trennbar sind.

Die sich bei der erfindungsgemäßen Lösung ergebenden Vorteile sind äußerst vielfältig. So wird zunächst durch die vollständige Integration des Elektromotors in die Griffhülse des Handstücks eine verkürzte Bauform erreicht, was zu einer verbesserten Ergonomie führt. Dies ist auf ein reduziertes Gewicht für das Handstück sowie kleinere wirksame Hebelarme zurückzuführen. Ein weiterer Vorteil besteht darin, dass Motordrehzahlen im einem sehr weiten Bereich von 10.000 - 300.000 U/min, vorzugsweise von 75.000 - 250.000 U/min genutzt werden können, weshalb weniger und einfacher ausgestaltete Getriebeelemente zur Übertragung der Rotationsbewegung eingesetzt werden können. Insgesamt kann die Anzahl von mechanischen Komponenten zur Bewegungsübertragung bei der erfindungsgemäßen Lösung deutlich reduziert werden, was in einer besser beherrschbaren Herstellung, geringen Herstellungskosten sowie einer verbesserten Wartungsfreundlichkeit resultiert. Auch die Hygiene des Handstücks ist bei der erfindungsgemäßen Lösung verbessert, da die beim Stand der Technik vorgesehenen bzw. erforderlichen Schnittstellen bzw. Kopplungen zwischen einem Motorteil und weiteren Handstück-Komponenten entfallen. Schließlich wird auch das Betriebsgeräusch des Handstücks reduziert, da die im Betrieb bewegten Massen deutlich geringer sind, als bei den aus dem Stand der Technik bekannten Handstücken.

Gemäß einer vorteilhaften Weiterbildung der vorliegenden Erfindung bewirkt das Kopfgetriebe vorzugsweise eine Drehsinnumkehr, wobei der Motor dann linksdrehend angesteuert wird. Hierbei kann ferner vorgesehen sein, dass eines der Getriebe eine Übersetzung aufweist, welche im Bereich zwischen 2 : 1 und 1 : 2 liegen kann.

Der Motor weist vorzugsweise eine max. Drehzahl von 250.000 U/min auf.

Andere Weiterbildungen der Erfindung betreffen insbesondere die Ausgestaltung und Lagerung des Motors innerhalb des erfindungsgemäßen Handstücks. Hierbei ist - wie bereits erwähnt - vorgesehen, dass ein kollektor- bzw. bürstenloser Gleichstrommotor (BLDC-Motor) mit mindestens einem rotierenden Permanentmagneten zum Einsatz kommt, der sich durch seinen hohen Wirkungsgrad auszeichnet. Um die empfindlichen Komponenten dieses Motors während des bei derartigen Handstücken regelmäßig erforderlichen Sterilisiervorgangs effektiv schützen zu können, sind nunmehr besondere Maßnahmen vorgesehen, welche Gegenstand weiterer abhängiger Ansprüche sind.

So können zunächst der oder die Permanentmagnete des Rotors mit einer speziellen Beschichtung versehen sein, welche diese vor Korrosion schützen. Ein Schutz der empfindlichen Statorwicklungen sowie der Statorbleche hingegen kann dadurch erreicht werden, dass der Stator von einer sterilisierfähigen Kunststoffumhüllung bzw. Kunststoffumspritzung umgeben ist. Insbesondere ist der Stator insgesamt in Kunststoff eingegossen, wobei dieser Kunststoff dann gleichzeitig auch das Motorgehäuse bildet. Letztendlich wird hierdurch eine Ummantelung für die gesamte Motoreinheit geschaffen, durch welche diese effektiv gegen die hohen Temperaturen und die Luftfeuchtigkeit während des Sterilisiervorgangs geschützt wird. Als besonders bevorzugtes Material zur Realisierung der Kunststoffummantelung hat sich hierbei ein Hochleistungskunststoff herausgestellt, der unter dem Markennamen PEEK vertrieben wird. Dieses Material zeichnet sich durch seine guten Werkstoffkennwerte, speziell auch bei hohen Temperaturen aus, wie sie bei einer Sterilisation vorliegen, und ist ferner hydrolysebeständig.

Die Nutzung des Kunststoffgehäuses führt dann allerdings zu der Problematik, dass der Kunststoff einen anderen Wärmeausdehnungskoeffizienten aufweist, als das umgebende Material der Handstückhülse. Um hierbei auftretende Spannungen zwischen Handstückhülse und Kunststoffgehäuse zu vermeiden bzw. zu reduzieren, ist gemäß der Erfindung vorgesehen, dass der Motor in spezieller Art und Weise innerhalb der Handstückhülse gelagert ist. Erfindungsgemäß ist kein festes Verschrauben des Motors mit der Hülse sondern stattdessen eine federnde Lagerung vorgesehen. Hierdurch wird eine gewisse Flexibilität geschaffen, wobei allerdings durch die Federkraft sichergestellt ist, dass der Motor grundsätzlich mit einer im wesentlichen gleichen Kraft gegen einen Anschlag innerhalb der Griffhülse gedrückt wird. Die hierzu verwendete Feder gleicht damit entsprechende unterschiedliche Ausdehnungen der Griffhülse und des Motorgehäuses aus. Diese besondere Lagerung führt einerseits dazu, dass Beschädigungen an dem Motor vermieden werden, andererseits ist sichergestellt, dass der Motor dauerhaft in gleicher Weise innerhalb der Griffhülse angeordnet ist, was insofern von Vorteil ist, als hierdurch eine sehr genaue Kopplung mit weiteren Kraftübertragungselementen des Antriebs sichergestellt ist.

Zahnärztliche oder zahnmedizinische Handstücke weisen üblicherweise auch eine Beleuchtungseinrichtung auf, über welche während der Nutzung des Handstücks der zu bearbeitende Bereich im Mundraum eines Patienten ausgeleuchtet wird. Auch beim erfindungsgemäßen Handstück kann eine derartige Maßnahme vorgesehen sein, wobei hierzu vorzugsweise ein Lichtleiter genutzt wird, der sich von den Kupplungselementen des Handstücks bis zu einer Lichtaustrittsstelle im vorderen Endbereich erstreckt. Dieser Lichtleiter ist insbesondere einstückig ausgestaltet und erstreckt sich also durchgehend zu der Lichtaustrittsstelle, wobei er an dem Motor, der vorzugsweise leicht exzentrisch innerhalb der Griffhülse angeordnet ist, vorbeigeführt ist. Des Weiteren können sich Medienleitungen durch das Handstück erstrecken, welche zur Zuführung von Luft und/oder Wasser dienen. Hierbei können innerhalb des Handstücks auch entsprechende Filtereinrichtungen angeordnet werden.

Nachfolgend soll die Erfindung anhand der beiliegenden Zeichnungen näher erläutert werden. Es zeigen:
- Fig. 1: schematisch ein Ausführungsbeispiel der vorliegenden Erfindung in Form eines erfindungsgemäß ausgestalteten zahnärztlichen Winkelhandstücks;
- Fig. 2: eine Darstellung des Rotors eines in dem erfindungsgemäßen Handstück angeordneten Elektromotors;
- Fig. 3: die Ausgestaltung des Stators des Elektromotors;
- Fig. 4: eine Schnittdarstellung des Elektromotors;
- Fig. 5: die Lagerung des Elektromotors innerhalb der Handstückhülse;
- Fig. 6 und 7: vergrößerte Ausschnitte der Darstellung von Fig. 5;
- Fig. 8 u. 9: einen Teilschnitt des Handstücks zur Verdeutlichung des Verlaufs der Medienleitungen sowie eines Lichtleiters;
- Fig. 10: eine weitere Ansicht der entlang des Handstücks verlaufenden Medienleitungen und
- Fig. 11 u. 12: aus dem Stand der Technik bekannte Konzepte für zahnärztliche Handstücke.

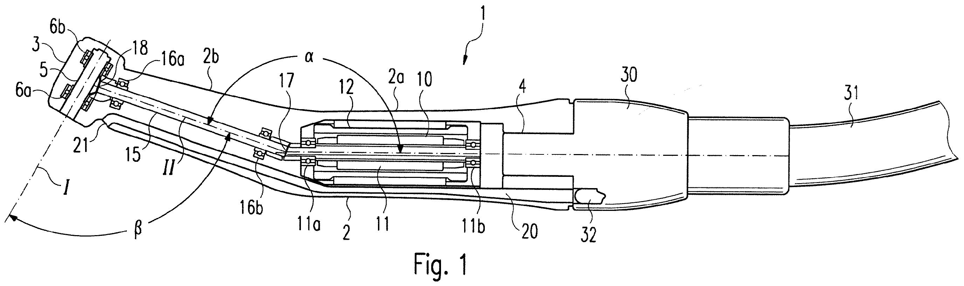

Das in Figur 1 schematisch dargestellte und allgemein mit dem Bezugszeichen 1 versehene erfindungsgemäße zahnärztliche oder zahnmedizinische Handstück weist als wesentliches Element eine längliche Griffhülse 2 auf. Im dargestellten Ausführungsbeispiel ist das Handstück 1 als sog. Winkelhandstück ausgebildet. Die einstückig ausgebildete Griffhülse 2 weist einen hinteren Bereich 2a und einen vorderen Bereich 2b auf, welche miteinander einen Winkel α von etwa 155° bis 170°, vorzugsweise von 162° einschließen. Die Handhabung des Handstücks 1 innerhalb des Mundraums eines Patienten wird durch diese Ausgestaltung vereinfacht.

Am vorderen Ende der Griffhülse 2 befindet sich der Kopfbereich des Handstücks 1, der eine mittels zweier Lager 6a, 6b drehbar gelagerte Werkzeugaufnahme 5 aufweist. Diese Werkzeugaufnahme 5 weist nicht näher dargestellte Einspannmittel zum wahlweisen Einspannen eines zahnärztlichen Behandlungswerkzeugs auf, welches in Rotation versetzt zur abhebenden Bearbeitung eingesetzt wird. Insbesondere ist die Werkzeugaufnahme 5 des Kopfbereichs 3 zur drehbaren Lagerung von zahnärztlichen Bohrern vorgesehen. Um die ergonomischen Eigenschaften des Handstücks 1 weiter zu verbessern, ist der Kopfbereich 3 ferner erfindungsgemäß derart ausgeführt, dass die Längsachse I der Werkzeugaufnahme 5 mit der Achse II des vorderen Endbereichs 2b der Griffhülse einen Winkel β von etwa 100° einschließt. Im Vergleich zu klassischen Ausführungsformen von Winkelhandstücken, bei denen der Bohrer in einem rechten Winkel zur Griffhülse ausgerichtet ist, führt diese bevorzugte Formgebung zu einer nochmals verbesserten Handhabung.

Am rückseitigen Ende ist die Griffhülse 2 mit dem Anschlussteil 30 eines Versorgungsschlauchs 31 verbunden, der insbesondere zu einer (nicht dargestellten) Versorgungseinrichtung eines zahnärztlichen Behandlungsplatzes führt. Über diesen Versorgungsschlauch 31 werden dem Handstück 1 die zum Betrieb erforderlichen Medien zur Verfügung gestellt, wobei es sich hierbei insbesondere um Strom handelt. Dieser Strom wird - wie später noch näher erläutert wird - zum Betrieb des Motors verwendet und könnte ferner auch dazu genutzt werden, eine Beleuchtung zur Verfügung zu stellen. Des Weiteren können allerdings auch zusätzliche Behandlungsmedien wie Luft und/oder Wasser zur Verfügung gestellt werden, welche entweder einzeln oder auch als Luft-/Wasser-Gemisch beispielsweise zum Reinigen der zu bearbeitenden Oberfläche genutzt werden können. Die sich in diesem Fall durch das Handstück 1 zusätzlich erstreckenden Medienleitungen sind im vorliegenden Fall aus Gründen der Einfachheit nicht näher dargestellt. Ihre Anordnung in dem Handstück 1 wird zu einem späteren Zeitpunkt noch näher erläutert. Sollten derartige Leitungen vorhanden sein, können ferner auch entsprechende Medienfilter in dem Handstück 1 angeordnet werden.

Der Anschluss des Handstücks 1 erfolgt dann über ein im rückwärtigen Ende der Griffhülse 2 befindliches Kupplungselement 4, über welche eine Verbindung mit dem Schlauchanschlussteil 30 erfolgt. Die vorzugsweise als Schnellkupplung ausgestaltete Verbindung kann dabei beispielsweise derart ausgestaltet sein, dass das Handstück 1 frei drehbar ist. Wie nachfolgend noch näher erläutert wird, ist die Kupplung im dargestellten Ausführungsbeispiel allerdings derart ausgestaltet, dass eine feste Orientierung zwischen Handstück 1 und Schlauchanschlussteil 30 vorliegt.

Zahnärztliche Handstücke können grundsätzlich gesehen mit unterschiedlichen Antrieben ausgestaltet sein. Klassischerweise werden beispielsweise Luft- bzw. Turbinenantriebe oder elektrische Antriebe eingesetzt. Eine Turbine zeichnet sich dabei durch ihre kompakte Bauweise aus, andererseits ist die Betriebssicherheit im Vergleich zu einem Elektromotor geringer. Ferner besteht im Vergleich zu einem Elektromotor nur im begrenzten Umfang die Möglichkeit, die zu übertragende Leistung zu steuern.

Elektromotoren hingegen wiesen bislang den Nachteil auf, dass durch ihren Einsatz die Bauweise des Handstücks vergrößert wurde. Im vorliegenden Fall wird nunmehr allerdings ein Mikromotor als Elektromotor eingesetzt, der vollständig innerhalb der Griffhülse 2 des Handstücks 1 gelagert ist. Der allgemein mit dem Bezugszeichen 10 versehene Motor weist hierzu einerseits einen fest - d.h. nicht drehbar - in der Handstückhülse 2 gelagerten Stator 12 sowie andererseits einen gegenüber diesem Stator 12 mit Hilfe zweier Lager 11a und 11b drehbar gelagerten Rotor 11 auf. Die genaue Ausgestaltung des Motors 10 wird zum einem späteren Zeitpunkt noch näher erläutert. Von besonderer Bedeutung ist vorerst, dass die Abmessungen des Motors 10 sehr kompakt gehalten sind, so dass dieser vollständig in die Griffhülse 2 integriert ist. Hierbei ist insbesondere zu beachten, dass die Griffhülse 2 einstückig ausgestaltet ist oder aus mehreren Teilen besteht, welche für den Benutzer untrennbar miteinander verbunden sind, und dementsprechend keine Verbindungsschnittstellen vorliegen, wie sie sich bei den bekannten Ausgestaltungen gemäß dem Stand der Technik ergeben. Der Elektromotor 10 ist dementsprechend für eine dauerhafte Lagerung innerhalb der Handstückhülse 2 ausgelegt und bildet mit dieser eine Einheit, weshalb er auch sterlisierbar ist, um eine regelmäßige Reinigung und Sterilisation des Handstücks 1 insgesamt zu ermöglichen.

Die von dem Motor 10 erzeugte Drehbewegung wird mittels einer Welle 15, welche sich durch den vorderen Griffhülsenbereich 2b erstreckt, auf die Werkzeugaufnahme 5 übertragen. Diese Welle 15, die wiederum mittels zweier Wälzlager 16a, 16b drehbar gelagert ist, ist hierzu an ihrem rückwärtigen Ende über ein Kniegetriebe 17 mit dem Rotor 11 des Elektromotors 10 gekoppelt, am vorderen Ende erfolgt eine Kopplung zwischen Welle 15 und Werkzeugaufnahme 5 mittels eines Kopfgetriebes 18. Das Kopfgetriebe 18 kann hierbei insbesondere eine Drehsinnumkehr bewirken, wobei der Elektromotor 10 dann vorzugsweise linksdrehend angesteuert wird, um die gewünschte Rotation eines in der Werkzeugaufnahme 5 gehaltenen Bohrers hervorzurufen. Insgesamt gesehen weist das erfindungsgemäße Handstück also lediglich drei drehbare gelagerte Achsen bzw. Wellen auf (den Motorrotor 11, die Zwischenwelle 15 sowie die drehbare Werkzeugaufnahme 5 mit dem integrierten Spannsystem), um mittels der an das Handstück angelegten Spannung den Bohrer bzw. allgemein das Werkzeug in Rotation zu versetzen. Ferner könnte theoretisch auch ein Planetengetriebe (mit dann mehreren Drehachsen) zur Drehzahlübertragung verwendet werden.

Vorteile dieser besonderen Ausgestaltung liegen darin, dass sich eine sehr direkte Kraftübertragung von dem Motor 10 auf die Werkzeugaufnahme 3 ergibt. Die Anzahl der erforderlichen mechanischen Komponenten zur Bewegungsübertragung wird im Vergleich zu bisherigen Lösungen also deutlich verringert. Dies wiederum hat zur Folge, dass die Herstellung des Handstücks 1 vereinfacht und kostengünstiger gestaltet werden kann und ferner auch das Handstück 1 insgesamt reparaturfreundlicher ist. In diesem Zusammenhang ist zu berücksichtigen, dass in der Dentalindustrie zur Bearbeitung von Zahnhartsubstanz Drehzahlen für den Bohrer im Bereich zwischen 120.000 U/min und 300.000 U/min benötigt werden. Winkelstücke, welche mechanisch von einem Motor über Getriebeelemente angetrieben werden, arbeiten bislang überwiegend bei Enddrehzahlen im Bereich von 200.000 U/min, was dadurch ermöglicht wird, dass die Drehzahl eines klassischen Antriebsmotors von etwa 40.000 U/min mittels mehrerer Getriebeelemente um den Faktor 5 auf die gewünschten 200.000 U/min übersetzt wird. Auch Übersetzungen um den Faktor 3, 4 oder 6 sind vereinzelt im Einsatz. Die für eine derart hohe Übersetzung erforderlichen Getriebeelemente bestehen allerdings aus vielen Einzelteilen, die aufgrund der hohen Drehzahlen mit höchster Präzision hergestellt werden müssen, um unerwünschte Oberflächenschwingungen und Geräuschemissionen so klein wie möglich zu halten. Die erforderlich Präzision und die Vielzahl von Bauteilen verursachen hohe Kosten.

Die demgegenüber bei dem erfindungsgemäßen Handstück 1 vorliegende direkte Kraftübertragung sowie die Verwendung hochdrehender Motoren ermöglicht nunmehr den Einsatz von Getrieben, bei denen die Drehzahlübertragung lediglich im Bereich zwischen 0,5 und 2 liegt, wobei trotz allem verschiedenste Drehzahlbereiche und Leistungsbereiche zur Verfügung stehen. Hierzu kann insbesondere vorgesehen sein, dass der Elektromotor 10 bei Drehzahlen im Bereich von 10.000 bis 300.000 U/min, vorzugsweise von 75.000 bis 250.000 U/min bzw. maximal bis zu 250.000 U/min arbeitet. Das Kniegetriebe 17 und/oder das Kopfgetriebe 18 können dann - sofern gewünscht - entsprechende Übersetzungen im Bereich zwischen 1 : 2 und 2 : 1 aufweisen. Letztendlich können hiermit also problemlos Enddrehzahlen für den Bohrer in einem bevorzugten Bereich von 150.00 bis 250.000 U/min bzw. sogar bis zu 300.000 U/min erzielt werden, wobei allerdings auch die Nutzung im unteren Drehzahlbereich denkbar wäre. In diesem Fall ist sicherzustellen, dass der Motor 10 ein ausreichendes Drehmoment zur Verfügung stellt.

Ferner führt die direktere Kraftübertragung bei dem erfindungsgemäßen Handstück 1 aufgrund der weniger komplexen Übersetzungsgetriebe auch zu einer höheren Laufruhe. Hierbei ist anzumerken, dass in der Dentaltechnik Drehzahlen oberhalb von 80.000 U/min üblicherweise zu erheblichen Problemen im Hinblick auf Geräusche und Vibrationen führen, was insbesondere dann der Fall ist, wenn die Drehzahlübertragung mittels einer lösbaren Kupplung zwischen einem separaten Motorteil und dem Winkelstück erfolgt. Diese Problematik besteht bei der Lösung gemäß der vorliegenden Erfindung offensichtlich nicht, was insbesondere darauf zurückzuführen ist, dass die Übergabe der Rotationsbewegung jeweils durch Zahnradpaarungen erfolgt, die durch den Anwender nicht getrennt werden können. Die besonders bevorzugte Anordnung des Kopfbereiches 3 in einem Winkel von etwa 100° gegenüber dem vorderen Endbereich 2b der Griffhülse 2 kann ferner ohne eine zusätzliche mechanische Drehrichtungsumkehr erfolgen. Schließlich wird die Hygiene des Handstücks 1 verbessert, da der Einsatz verschiedenster Kupplungen entfallen kann.

Durch die vollständige Integration des Mikromotors 10 in die Griffhülse 2 wird ferner der Vorteil erzielt, dass das Handstück 1 nach wie vor sehr kompakt gehalten werden kann und eine Handlichkeit aufweist, die mit derjenigen eines Turbinenhandstücks vergleichbar ist. So kann der vordere Griffhülsenbereich 2b mit einem Durchmesser von lediglich etwa 12 bis 18 mm realisiert werden. Auch die Größe des Kopfbereichs 3 kann im Vergleich zu bekannten Lösungen weiter reduziert werden. Hierdurch wird eine sehr präzise Bohrerführung ermöglicht, was letztendlich in einem genaueren Arbeiten resultiert. Ferner ermöglicht die Nutzung des Elektromotors auch, wahlweise die Drehrichtung durch eine entsprechende Einstellung des Motors 10 einzustellen. Insbesondere beim Beschleifen von Zahnersatzteilen oder ähnlichen Elementen werden hierbei Vorteile erhalten, da wahlweise ein Rechts- oder Linkslauf eingestellt werden kann.

Um die Nutzungsmöglichkeiten des Handstücks 1 weiter zu verbessern, kann ferner noch das Zurverfügungstellen einer Beleuchtung vorgesehen sein. Hierzu erstreckt sich längs durch die Griffhülse 2 ein Lichtleiter 20, der mit seinem vorderen Ende in einer Lichtaustrittsöffnung 21 mündet. Das vordere Ende des Lichtleiters 20 ist dabei derart ausgerichtet, dass das Licht in etwa auf den vorderen Endbereich eines in der Werkzeugaufnahme 5 gehaltenen Werkzeugs gerichtet ist.

Das in den Lichtleiter 20 eingekoppelte Licht stammt von einer Lampe 32, die in dem Schlauchanschlussteil 30 gelagert ist. Dementsprechend ist vorzugsweise eine feste Ausrichtung zwischen Handstück 1 und Schlauchanschlussteil 30 derart vorgesehen, dass das Licht der Lampe 32 in effektiver Weise in das fluchtend ausgerichtete Stirnende des Lichtleiters 20 eingekoppelt werden kann. Auf diese Weise wird eine leistungsfähige Beleuchtung des zu bearbeitenden Bereichs ermöglicht.

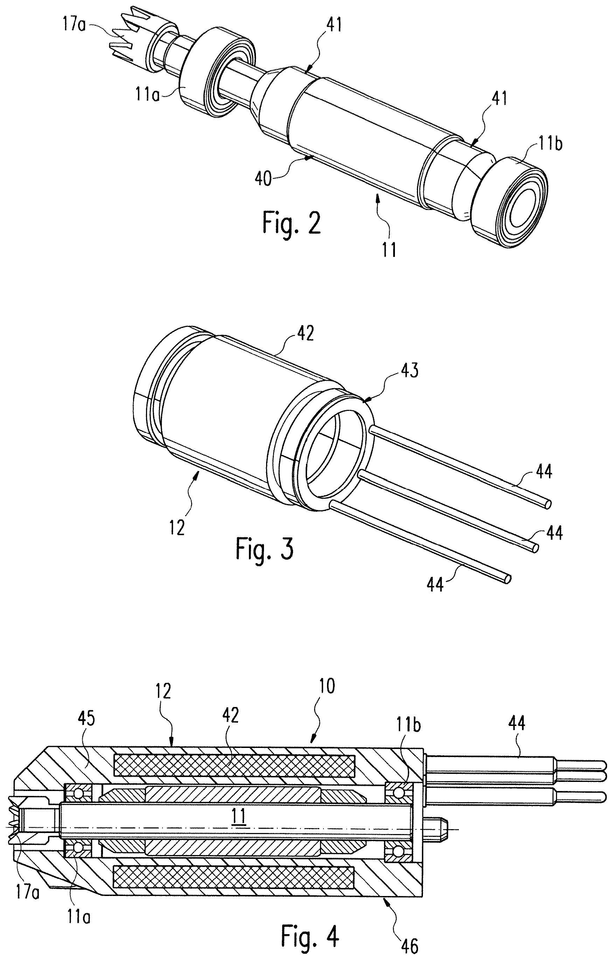

Die Integration des Elektromotors 10 in die Griffhülse 2 des Handstücks 1, die einen wesentlichen Punkt der vorliegenden Erfindung darstellt, wird insbesondere auch durch eine spezielle Ausgestaltung des Motors 10 unterstützt, welche nachfolgend anhand der Fig. 2 bis 4 näher beschrieben werden soll. Fig. 2 zeigt hierzu in vergrößerter Darstellung die Außenansicht des Rotors 11 des Motors 10, während Fig. 3 die Außenansicht des Stators 12 zeigt. Fig. 4 wiederum ist eine Schnittdarstellung des Motors 10 in einem Zustand, in dem der Rotor 11 innerhalb des Stators 12 angeordnet ist.

Bei dem Motor 10 handelt es sich wie bereits erwähnt um einen kollektorlosen bzw. bürstenlosen Gleichstrommotor mit einem Permanentmagnetrotor. Derartige sog. BLDC (Brushless Direct Current)-Motoren zeichnen sich durch ihren hohen Wirkungsgrad aus, der sich insbesondere auch durch eine entsprechende Ansteuerung der Statorwicklungen ergibt. Die auf die Lage bzw. die Winkelstellung des Rotors 11 angepasste Bestromung der Statorwicklungen, die sog. Kommutierung wird durch eine entsprechende Steuerelektronik sichergestellt, welche die Lage des Rotors 11 permanent detektiert und dementsprechend die Wicklungen mit Strom einer geeigneten Phase versorgt. Eine derartige Vorgehensweise ist bei BLDC-Motoren bereits grundsätzlich bekannt und soll dementsprechend im nachfolgenden nicht näher erläutert werden. Angemerkt werden soll lediglich, dass die Möglichkeit besteht, die Lage des Rotors 11 entweder durch den Einsatz entsprechender - nicht dargestellter - Sensoren oder durch den Verlauf des Stroms durch die Statorwicklungen zu ermitteln. Der Motor weist eine Leistung von mehr als 10 Watt, insbesondere eine Leistung im Bereich zwischen 10 und 30 Watt auf.

Da gemäß der vorliegenden Erfindung der Motor 10 dauerhaft in der Griffhülse 2 des Handstücks 1 verbleiben soll, müssen nunmehr allerdings besondere Maßnahmen getroffen werden, welche ein Reinigen bzw. Sterilisieren des Handstücks 1 ermöglichen, ohne dass hierbei die Komponenten des Motors 10 beschädigt werden.

Hierzu ist zunächst vorgesehen, dass der oder die Permanentmagnete 40 des in Fig. 2 dargestellten Rotors 11, welche üblicherweise sehr korrosionsempfindlich sind, speziell beschichtet, vorzugsweise vernickelt werden. Eine derartige Beschichtung schützt die Oberflächen der Dauermagnete 40, die vorzugsweise durch sog. Seltenerdmagnete gebildet sind, vor den heißen Dämpfen während des Sterilisiervorgangs und führt dazu, dass keine besondere Abdichtung des Motors 10 erforderlich ist. Der bzw. die Rotormagnete 40 sind dabei entsprechend der Darstellung gemäß Fig. 2 zwischen zwei Auswuchtringen 41 angeordnet, wobei die sich hierbei ergebende Anordnung, an deren vorderen Ende das Zahnrad 17a zur Drehübertragung angeordnet ist, dann mittels zweier Kugellager 11a und 11b in der Statorwicklung 12 gelagert ist.

Die Statorwicklung 12 wiederum ist ebenfalls in spezieller Weise ausgebildet, um einerseits einen hohen Wirkungsgrad des Motors 10 und andererseits die angestrebte Sterilisierbarkeit zu ermöglichen.

Im Hinblick auf den gewünschten hohen Wirkungsgrad des Motors 10 ist zunächst zu berücksichtigen, dass ein hoher Wirkungsgrad und somit eine geringe Erwärmung bei den angestrebten hohen Drehzahlen nur dann erzielt werden kann, wenn die Leerlaufverluste, die durch das rotierende Magnetfeld des Rotors 11 hervorgerufen werden, möglichst gering gehalten werden. Diese Verluste teilen sich in Ummagnetisierungs- und Wirbelstromverluste im Statorblech auf. Um deshalb diese Verluste so gering wie möglich zu halten, wird der Stator 12 aus einer Vielzahl von in axialer Richtung hintereinander angeordneten Blechen 42 realisiert, welche aus einer Nickel-Eisen-Legierung bestehen. Dieses Material zeichnet sich zum einen durch eine relativ hohe sog. Sättigungsinduktion und zum anderen durch einen hohen spezifischen elektrischen Widerstand aus. Entscheidend ist ferner, dass die verwendeten Bleche 42 eine äußerst geringe Dicke von vorzugsweise lediglich 0,1 mm aufweisen, was dazu führt, dass die Wirbelstromverluste äußerst gering gehalten werden können.

Zum Schutz dieser Anordnung sind dann die Statorbleche 42 sowie die Wicklungen 43 des Stators 12 komplett in einen wasch- bzw. sterilisierfähigen Kunststoff 45 eingebettet, wie insbesondere der Schnittdarstellung in Fig. 4 entnommen werden kann. Durch diese Einkapselung bzw. Ummantelung 45, innerhalb der auch die beiden Lager 11a und 11b angeordnet sind und aus der rückseitig lediglich die Anschlüsse 44 für die Wicklungen 43 des Stators 12 hervorragen, wird ein Eindringen von Wasser bzw. Schmutz in die Wicklungen 43 verhindert. Ferner kann das Rückschlussblech des Stators 12 wiederum in spezieller Weise, bspw. mit Hilfe einer entsprechenden Beschichtung gegen Korrosion geschützt sein. Speziell die empfindlichen Statorwicklungen 43 sowie die Statorbleche 42 können hierdurch in effektiver Weise geschützt werden. Wie der Darstellung in Fig. 4 entnommen werden kann, schließt die Kunststoffummantelung diese empfindlichen Komponenten des Motors 10 vollständig ein. Diese Kunststoffummantelung bildet somit insgesamt in Form eines Motorgehäuses 46 einen Schutz für den Motor 10, da hierdurch auch der Rotor 11 weitestgehend umschlossen wird. Lediglich durch die beiden Lager 11a, 11b am vorderen und hinteren Ende des Rotors 11 könnte ein geringer Anteil von heißem Wasserdampf und anderen Medien in den Innenraum des Stators 12 eindringen. Die Beschichtung des bzw. der Rotormagnete 40 bietet in diesem Fall dann allerdings einen ausreichenden Schutz während des Wasch- bzw. Sterilisierungsvorgangs, so dass keine separater besonderer Schutz, z.B. ein spezielles Abdichten des Handstücks 1 erforderlich ist.

Als Material für die Einkapselung bzw. Ummantelung 45 wird vorzugsweise der Kunststoff PEEK verwendet. Dieser Kunststoff, der sowohl in leichtfließenden als auch in glasfaserverstärkten Varianten vorliegt, hat sich als besonders vorteilhaft im Hinblick auf die angestrebte Sterilisierbarkeit erwiesen, da dieses Material auch bei hohen Temperaturen gute Werkstoffkennwerte aufweist und ferner hydrolysebeständig ist.

Hervorzuheben ist ferner, dass die Lager 11a, 11b fest in den Stator 12 integriert sind. Der Motor 10 bildet dementsprechend eine kompakte Baueinheit. Die gesamte Kühlluft wird in diesem Fall durch den Luftspalt zwischen Rotor 11 und Stator 12 geführt, wobei ein Teil der Luft über den Stator außen zurückgeführt werden kann, was zu einem weiteren Kühleffekt führt. Der andere Teil der Luft wiederum strömt über die Getriebe in den vorderen Bereich des Handstücks 1 und tritt hier aus. Eine Schmierung der Motorlager 11a, 11b erfolgt ebenfalls über den Luftspalt. Insgesamt gesehen kann also ein sehr kompakt gehaltener Elektromotor mit einem äußerst hohen Wirkungsgrad erzielt werden.

Die Idee, das Gehäuse 46 des Motors 10 durch eine Kunststoffummantelung 45 mit einem eingespritzten Stator 12 zu realisieren führt allerdings zu einer weiteren Problematik, die - sowie deren Lösung - nachfolgend erläutert werden soll.

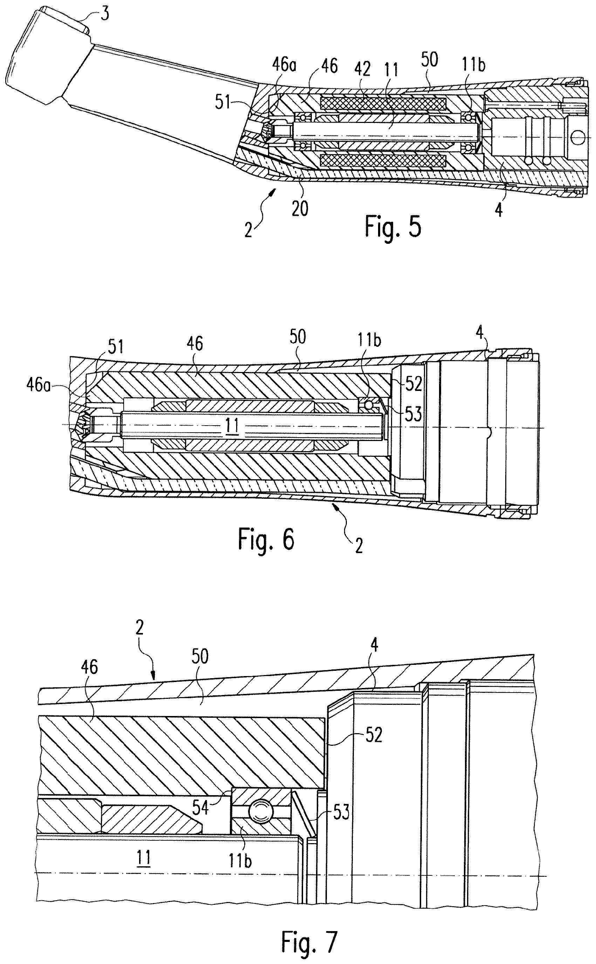

So sollte das Gehäuse 46 des Motors 10 in dem Handstück 1 nicht dauerhaft unter zu großer Spannung stehen, da es sonst insbesondere während der Sterilisation aufgrund unterschiedlicher Wärmeausdehnungen der Bauteile zu Schädigungen kommen kann. Ein starrer Einbau des Motors 10, bspw. durch eine entsprechende Verschraubung der Bauteile, würde somit zu Schwierigkeiten führen, da sich wegen des höheren Wärmeausdehnungskoeffizienten des Kunststoffgehäuses 46 gegenüber Stahl bei Erwärmung die axialen Spannungen noch verstärken würden. Da andererseits die im Motorgehäuse 46 gelagerte Motorachse bzw. der Stator 11 aufgrund der erforderlichen hohen Genauigkeit des Zahneingriffs des Kupplungselements 17 sehr exakt positioniert werden muss, wird eine spezielle Lagerung des Motors 10 in der Handstückhülse 2 vorgeschlagen, die insbesondere den Darstellungen in den Fig. 5 bis 7 entnommen werden kann.

Die Lösung des zuvor geschilderten Problems besteht darin, dass das in einem Hohlraum 50 der Griffhülse 2 gelagerte Motorgehäuse 46 mit seinem vorderen Ende 46a an einem festen Anschlag 51 innerhalb der Instrumentenhülse 2 anliegt. Am rückwärtigen Ende des Motors 10 hingegen liegt ein Luftspalt 52 zum fest in der Instrumentenhülse 2 verschraubten Kupplungseinsatz 4 vor, wobei dieser Luftspalt 52 insbesondere den vergrößerten Darstellung in den Fig. 6 und 7 - in denen lediglich das hintere Lager 11b teilweise dargestellt ist - entnommen werden kann. Am Kupplungseinsatz 4 wiederum ist eine Tellerfeder 53 angeordnet, die sich axial einerseits am Kupplungseinsatz 4 abstützt und auf der anderen Seite am Außenring des hinteren Kugellagers 11b der Motorachse 11 anliegt. Dieser Außenring leitet die Federkraft der Tellerfeder 53 über einen Bund 54 ins Motorgehäuse 46 über, das auf diese Weise gegen den vorderen Anschlag 46a der Instrumentenhülse 2 gedrückt wird.

Kommt es nunmehr aufgrund einer Erwärmung des Motorgehäuses 46 bspw. während der Sterilisation zu einer Dehnung des Gehäuses 46, so wird die Tellerfeder 53 etwas gestaucht. Die axiale Kraft allerdings, die auf das Gehäuse 46 wirkt, nimmt praktisch nicht zu, so dass Spannungen während des Sterilisiervorgangs reduziert werden können. Der Luftspalt 52 ist hierbei derart dimensioniert, dass er die auftretenden Dehnungen aufnehmen kann, ohne dass hierbei das Motorgehäuse 46 am Kupplungseinsatz 4 ansteht. In Kombination mit den zuvor beschriebenen Maßnahmen zur Ausgestaltung des Motors 10 ergibt sich das Resultat, dass der Motor 10 einerseits in äußerst effektiver Weise gegen äußere Einflüsse geschützt ist und andererseits dauerhaft sicher innerhalb der Handstückhülse 2 gelagert ist. Dabei ist die Lagerung insbesondere derart, dass die korrekte Anordnung der Motorachse, insbesondere des Kupplungselements 17b zum Zahnrad der vorderen Antriebswelle 15 dauerhaft sichergestellt ist.

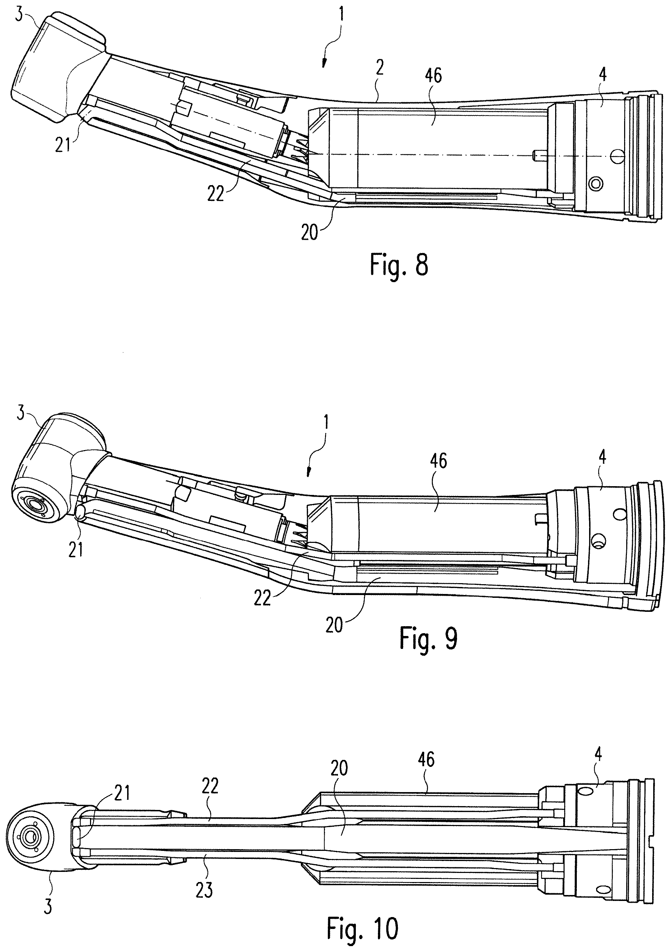

Wie bereits zuvor erwähnt wurde, zeichnet sich der erfindungsgemäß ausgestaltete Motor 10 insbesondere auch durch seine kompakte Anordnung innerhalb der Handstückhülse 2 aus. Dies ermöglicht es, zusätzliche Leitungen durch die Hülse zu führen, um während der Behandlung benötigte Reinigungs- oder Kühlmedien zur Verfügung zu stellen. Gemäß den Darstellungen in den Fig. 8 bis 10 ist hierbei insbesondere vorgesehen, dass der Motor 10 leicht exzentrisch innerhalb der Hülse angeordnet ist und entsprechende Medienleitungen 22, 23 zunächst an der Unterseite des Motorgehäuses 46 vorbeigeführt und dann zu dem Handstückkopf 3 geführt werden. Diese Medienleitungen 22, 23 dienen dabei insbesondere der Zuführung von Luft und Wasser, wobei auch die Möglichkeit besteht, beide Medien gleichzeitig in Form eines Sprays abzugeben. Zwischen beiden Medienleitungen ist ferner der bereits zuvor erwähnte Lichtleiterstab 20 geführt, der sich von dem Kupplungsteil 4 bis zum vorderen Lichtaustritt 21 erstreckt und eine Beleuchtung des bearbeitenden Bereichs ermöglicht. Die angesprochene exzentrische Anordnung des Motors 10 ist also insbesondere dann von Vorteil, wenn mehrere Leitungen durch die Handstückhülse 2 verlaufen. Für den Fall hingegen, dass eine Zuführung von Licht und Spraymedien nicht vorgesehen ist und dementsprechend keine zugehörigen Leitungen bzw. Lichtleiter durch das Handstück verlaufen, könnte der Motor 10 selbstverständlich auch zentrisch innerhalb der Hülse 2 angeordnet werden.

Letztendlich wird also ein Handstück geschaffen, welches hinsichtlich seiner Abmessungen, seiner Handhabung und seiner Betriebseigenschaften deutliche Vorteile gegenüber bisherigen Handstücken mit Elektromotoren aufweist. Hierdurch werden weitere Anwendungsmöglichkeiten für das Handstück geschaffen, da der hochtourige Antrieb beispielsweise auch für Anwendungen im HNO-Bereich, in der Mikrochirurgie oder bei minimal invasiven Behandlungen genutzt werden kann.

## Patentansprüche

1. Zahnärztliches, zahnmedizinisches oder dentaltechnisches Handstück (1), mit einer länglichen, vorzugsweise abgewinkelten Griffhülse (2),
a) an deren hinteren Ende Kupplungselemente (4) zum Anschließen des Handstücks (1) an einen mit einer zahnärztlichen Versorgungseinrichtung zu verbindenden Versorgungsschlauch (31) und
b) an deren vorderen Ende ein Kopfbereich (3) mit einer Werkzeugaufnahme (5) zur Halterung eines in Rotation zu versetzenden Werkzeugs
angeordnet sind,
wobei das Handstück (1) ferner einen Elektromotor (10) zum Antreiben eines von der Werkzeugaufnahme (5) gehaltenen Werkzeugs aufweist,
wobei der Elektromotor (10) vollständig in die Griffhülse (2) integriert ist, derart, dass er mit der Griffhülse (2) eine Einheit bildet,
wobei der Elektromotor (10) durch einen kollektorlosen Gleichstrommotor gebildet und innerhalb der Handstückhülse (2) in Axialrichtung federnd gelagert und gegen einen vorderen Anschlag (51) in der Hülse (2) vorgespannt ist,
und wobei am rückwärtigen Ende des Motors (10) eine Feder (53), insbesondere eine Tellerfeder angeordnet ist, welche sich einerseits an dem Motor (10) und andererseits an der Griffhülse (2) bzw. einem fest mit der Griffhülse (2) verbundenen Element abstützt.

2. Zahnärztliches, zahnmedizinisches oder dentaltechnisches Handstück nach Anspruch 1,
**dadurch gekennzeichnet,**
**dass** die Werkzeugaufnahme (5) mit dem Motor (10) über eine Welle (15) verbunden ist, welche sich durch den vorderen Bereich (2b) der Griffhülse (2) erstreckt,
wobei die Welle (15) an ihrem vorderen Ende mit der Werkzeugaufnahme (5) über ein Kopfgetriebe (18) und an ihrem hinteren Ende über ein Kniegetriebe (17) mit einer Motorwelle (11) gekoppelt ist, und
wobei die Griffhülse (2) einstückig ausgebildet ist oder aus mehreren Teilen besteht, welche untrennbar miteinander verbunden sind.

3. Zahnärztliches, zahnmedizinisches oder dentaltechnisches Handstück nach Anspruch 2,
**dadurch gekennzeichnet,**
**dass** das Kopfgetriebe (18) eine Drehsinnumkehr bewirkt und vorzugsweise der Motor (10) linksdrehend angesteuert wird.

4. Zahnärztliches, zahnmedizinisches oder dentaltechnisches Handstück nach Anspruch 2 oder 3,
**dadurch gekennzeichnet,**
**dass** zumindest eines der beiden Getriebe (17, 18) eine Übersetzung im Bereich zwischen 2:1 und 1:2 aufweist.

5. Zahnärztliches, zahnmedizinisches oder dentaltechnisches Handstück nach einem der Ansprüche 2 bis 4,
**dadurch gekennzeichnet,**
**dass** das bzw. die Getriebe (17, 18) jeweils durch Zahnradpaarungen gebildet sind, welche untrennbar in dem Handstück (1) ausgebildet sind.

6. Zahnärztliches, zahnmedizinisches oder dentaltechnisches Handstück nach einem der Ansprüche 2 bis 5,
**dadurch gekennzeichnet,**
**dass** dieses mit der Motorwelle (11), der Welle (15) und der Werkzeugaufnahme (5) lediglich drei drehbare Achsen zur Übertragung einer Drehbewegung des Motors (10) auf das Werkzeug aufweist.

7. Zahnärztliches, zahnmedizinisches oder dentaltechnisches Handstück nach einem der vorherigen Ansprüche,
**dadurch gekennzeichnet,**
**dass** der Motor (10) eine Drehzahl im Bereich zwischen 10.000 und 300.000 U/min aufweist.

8. Zahnärztliches, zahnmedizinisches oder dentaltechnisches Handstück nach Anspruch 7,
**dadurch gekennzeichnet,**
**dass** der Motor (10) eine max. Drehzahl von 250.000 U/min, insbesondere eine Drehzahl im Bereich zwischen 75.000 und 250.000 U/min aufweist.

9. Zahnärztliches, zahnmedizinisches oder dentaltechnisches Handstück nach einem der vorherigen Ansprüche,
**dadurch gekennzeichnet**,
dassder Rotor (11) des Motors (10) einen oder mehrere Permanentmagnete (40) aufweist, welche zum Schutz vor Korrosion mit einer Beschichtung versehen, insbesondere vernickelt sind.

10. Zahnärztliches, zahnmedizinisches oder dentaltechnisches Handstück nach Anspruch 9,
**dadurch gekennzeichnet,**
**dass** der Stator (12) des Motors (10) ein Paket aus in Axialrichtung hintereinander angeordneten Blechen (42) aufweist, wobei die Bleche (42) vorzugsweise eine Dicke von etwa 0,1 mm aufweisen.

11. Zahnärztliches, zahnmedizinisches oder dentaltechnisches Handstück nach Anspruch 9 oder 10,
**dadurch gekennzeichnet,**
**dass** der Stator (12) des Motors (10) von einer vorzugsweise aus PEEK bestehenden Kunststoffummantelung (45) umgeben ist, welche zugleich ein Motorgehäuse (46) bildet.

12. Zahnärztliches, zahnmedizinisches oder dentaltechnisches Handstück nach einem der vorherigen Ansprüche,
**dadurch gekennzeichnet,**
**dass** das Handstück (1) einen sich von den Kupplungselementen (4) bis zu einer Lichtaustrittsstelle (21) erstreckenden Lichtleiter (20) aufweist, wobei sich der Lichtleiter (20) vorzugsweise durchgehend zu der Lichtaustrittsstelle (21) erstreckt.

13. Zahnärztliches, zahnmedizinisches oder dentaltechnisches Handstück nach einem der vorherigen Ansprüche,
**gekennzeichnet durch**
ein oder mehrere sich durch das Handstück (1) erstreckende Medienleitung(en) (22, 23) für Luft und/oder Wasser.

14. Zahnärztliches, zahnmedizinisches oder dentaltechnisches Handstück nach Anspruch 12 oder 13,
**dadurch gekennzeichnet,**
**dass** der Motor (10) exzentrisch innerhalb der Griffhülse angeordnet ist und der Lichtleiter (20) und/oder die Medienleitung(en) (22, 23) seitlich an dem Motor (10) vorbeigeführt sind.

## Claims

1. A dental, dental-medical or dental-technical handpiece (1), having an elongate, preferably angled, grip sleeve (2)
a) there being arranged at the rearward end of the grip sleeve coupling elements (4) for the connection of the handpiece (1) to a supply hose (31) to be connected with a dental supply arrangement, and
b) there being arranged at the forward end of the grip sleeve a head section (3) with a tool receiver (5) for mounting a tool that is to be set rotating,
wherein the handpiece (1) further has an electric motor (10) for driving a tool held by the tool receiver (5),
wherein the electric motor (10) is completely integrated into the grip sleeve (2) so that it forms a unit with the grip sleeve (2),
wherein the electric motor (10) is formed by a collectorless dc motor and is spring-mounted, in the axial direction, within the handpiece sleeve (2) and is biased against a forward stop (51) in the sleeve (2),
and wherein arranged at the rearward end of the motor (10) there is a spring (53), in particular a plate spring, which on the one hand bears on the motor (10) and on the other hand bears on the grip sleeve (2) or an element fixedly connected with the grip sleeve (2).

2. A dental, dental-medical or dental-technical handpiece according to claim 1,
**characterised in that**
the tool receiver (5) is connected with the motor (10) via a shaft (15) which extends through the forward region (2b) of the grip sleeve (2),
wherein the shaft (15) is coupled with the tool receiver (5) via a head transmission (18) at its forward end and is coupled with a motor shaft (11) via a knee transmission (17) at its rearward end, and
wherein the grip sleeve (2) is constituted in one piece or consists of several parts which are connected with one another inseparably.

3. A dental, dental-medical or dental-technical handpiece according to claim 2,
**characterised in that**
the head transmission (18) brings about a reversal of direction of rotation, and the motor (10) is preferably controlled for counter-clockwise rotation.

4. A dental, dental-medical or dental-technical handpiece according to claim 2 or 3,
**characterised in that**
at least one of the two transmissions (17, 18) has a translation in the range between 2:1 and 1:2.

5. A dental, dental-medical or dental-technical handpiece according to any of claims 2 to 4,
**characterised in that**
the transmission or transmissions (17, 18) are in each case formed by gear wheel pairs which are formed inseparably in the handpiece (1).

6. A dental, dental-medical or dental-technical handpiece according to any of claims 2 to 5,
**characterised in that**
this has, with the motor shaft (11), the shaft (15) and the tool receiver (5), merely three rotatable axes for the transmission of a rotation of the motor (10) to the tool.

7. A dental, dental-medical or dental-technical handpiece according to any preceding claim,
**characterised in that**
the motor (10) has a speed of rotation in the range between 10,000 and 300,000 rpm.

8. A dental, dental-medical or dental-technical handpiece according to claim 7,
**characterised in that**
the motor (10) has a max. speed of rotation of 250,000 rpm, in particular a speed of rotation in the range between 75,000 and 250,000 rpm.

9. A dental, dental-medical or dental-technical handpiece according to any preceding claim,
**characterised in that**
the rotor (11) of the motor (10) has one or a plurality of permanent magnets (40) which for protection from corrosion are provided with a coating, in particular are nickel-plated.

10. A dental, dental-medical or dental-technical handpiece according to claim 9,
**characterised in that**
the stator (12) of the motor (10) has a package made of laminations (42) arranged behind one another in the axial direction, wherein the laminations (42) preferably have a thickness of approximately 0.1 mm.

11. A dental, dental-medical or dental-technical handpiece according to claim 9 or 10,
**characterised in that**
the stator (12) of the motor (10) is surrounded by a plastics sheathing (45), preferably consisting of PEEK, which at the same time forms a motor housing (46).

12. A dental, dental-medical or dental-technical handpiece according to any preceding claim,
**characterised in that**
the handpiece (1) has a light guide (20) extending from the coupling elements (4) up to a light exit point (21), wherein the light guide (20) preferably extends continuously to the light exit point (21).

13. A dental, dental-medical or dental-technical handpiece according to any preceding claim,
**characterised by**
one or a plurality of media lines (22, 23) for air and/or water extending through the handpiece (1).

14. A dental, dental-medical or dental-technical handpiece according to claim 12 or 13,
**characterised in that**
the motor (10) is arranged eccentrically within the grip sleeve, and the light guide (20) and/or the media line or lines (22, 23) are led past the motor (10) to the side.

## Revendications

1. Pièce à main (1) dentaire, bucco-dentaire ou utilisée en médecine dentaire, avec un manchon de préhension (2) allongé, de préférence coudé,
a) au niveau de l'extrémité arrière duquel sont disposés des éléments de couplage (4) servant à raccorder la pièce à main (1) à un tuyau flexible d'alimentation (31) à relier à un dispositif d'alimentation dentaire et
b) au niveau de l'extrémité arrière duquel est disposée une zone de tête (3) avec un logement d'outil (5) servant à maintenir un outil à amener en rotation,
dans laquelle la pièce à main (1) présente en outre un moteur électrique (10) servant à entraîner un outil maintenu par le logement d'outil (5),
dans laquelle le moteur électrique (10) est intégré en totalité dans le manchon de préhension (2) de telle manière qu'il forme avec le manchon de préhension (2) une unité,
dans laquelle le moteur électrique (10) est formé par un moteur à courant continu sans collecteur et est monté sur ressorts dans la direction axiale à l'intérieur du manchon de pièce à main (2) et est précontraint contre une butée (51) avant dans le manchon (2),
et dans lequel un ressort (53), en particulier une rondelle-ressort, est disposé au niveau de l'extrémité arrière du moteur (10), lequel ressort prend appui d'une part au niveau du moteur (10) et d'autre part au niveau du manchon de préhension (2) ou au niveau d'un élément relié de manière solidaire au manchon de préhension (2).

2. Pièce à main (1) dentaire, bucco-dentaire ou utilisée en médecine dentaire selon la revendication 1,
**caractérisée en ce**
**que** le logement d'outil (5) est relié au moteur (10) par l'intermédiaire d'un arbre (15), qui s'étend à travers la zone avant (2b) du manchon de préhension (2),
dans laquelle l'arbre (15) est couplé au niveau de son extrémité avant au logement d'outil (5) par l'intermédiaire d'un engrenage de tête (18) et au niveau de son extrémité arrière par l'intermédiaire d'un engrenage coudé (17) à un arbre de moteur (11), et
dans laquelle le manchon de préhension (2) est réalisé d'un seul tenant ou est constitué de plusieurs parties, qui sont reliées les unes aux autres de manière inséparable.

3. Pièce à main dentaire, bucco-dentaire ou utilisée en médecine dentaire selon la revendication 2,
**caractérisée en ce**
**que** l'engrenage de tête (18) entraîne un retournement de sens de rotation, et de préférence le moteur (10) est piloté avec une rotation vers la gauche.

4. Pièce à main dentaire, bucco-dentaire ou utilisée en médecine dentaire selon la revendication 2 ou 3,
**caractérisée en ce**
**qu'**au moins un des deux engrenages (17,18) présente une démultiplication dans la plage comprise entre 2:1 et 1:2.

5. Pièce à main dentaire, bucco-dentaire ou utilisée en médecine dentaire selon l'une quelconque des revendications 2 à 4,
**caractérisée en ce**
**que** l'engrenage ou les engrenages (17, 18) sont formés respectivement par des paires de roues dentées, qui sont réalisées de manière inséparable dans la pièce à main (1).

6. Pièce à main dentaire, bucco-dentaire ou utilisée en médecine dentaire selon l'une quelconque des revendications 2 à 5,
**caractérisée en ce**
**que** celle-ci présente avec l'arbre de moteur (11), l'arbre (15) et le logement d'outil (5) seulement trois axes rotatifs servant à transmettre un mouvement de rotation du moteur (10) sur l'outil.

7. Pièce à main dentaire, bucco-dentaire ou utilisée en médecine dentaire selon l'une quelconque des revendications précédentes,
**caractérisée en ce**
**que** le moteur (10) présente une vitesse de rotation située dans la plage comprise entre 10 000 et 300 000 t/min.

8. Pièce à main dentaire, bucco-dentaire ou utilisée en médecine dentaire selon la revendication 7,
**caractérisée en ce**
**que** le moteur (10) présente une vitesse de rotation maximale de 250 000 t/min, en particulier une vitesse de rotation située dans la plage comprise entre 75 000 et 250 000 t/min.

9. Pièce à main dentaire, bucco-dentaire ou utilisée en médecine dentaire selon l'une quelconque des revendications précédentes,
**caractérisée en ce**
**que** le rotor (11) du moteur (10) présente un ou plusieurs aimants permanents (40), qui, aux fins de la protection contre la corrosion, sont pourvus d'un revêtement, en particulier sont nickelés.

10. Pièce à main dentaire, bucco-dentaire ou utilisée en médecine dentaire selon la revendication 9,
**caractérisée en ce**
**que** le stator (12) du moteur (10) présente un paquet composé de tôles (42) disposées les unes derrière les autres dans la direction axiale, dans laquelle les tôles (42) présentent de préférence une épaisseur d'environ 0,1 mm.

11. Pièce à main dentaire, bucco-dentaire ou utilisée en médecine dentaire selon la revendication 9 ou 10,
**caractérisée en ce**
**que** le stator (12) du moteur (10) est entouré par une gaine en matière plastique (45) constituée de préférence de PEEK, qui forme dans le même temps un carter de moteur (46).

12. Pièce à main dentaire, bucco-dentaire ou utilisée en médecine dentaire selon l'une quelconque des revendications précédentes,
**caractérisée en ce**
**que** la pièce à main (1) présente un guide de lumière (20) s'étendant depuis les éléments de couplage (4) jusqu'à un point de sortie de lumière (21), dans laquelle le guide de lumière (20) s'étend de préférence en continu en direction du point de sortie de lumière (21).

13. Pièce à main dentaire, bucco-dentaire ou utilisée en médecine dentaire selon l'une quelconque des revendications précédentes,
**caractérisée par**
un ou plusieurs conduits de milieu (22, 23) pour de l'air et/ou de l'eau s'étendant à travers la pièce à main (1).

14. Pièce à main dentaire, bucco-dentaire ou utilisée en médecine dentaire selon la revendication 12 ou 13,
**caractérisée en ce**
**que** le moteur (10) est disposé de manière excentrique à l'intérieur du manchon de préhension, et le guide de lumière (20) et/ou le ou les conduits de milieu (22, 23) sont guidés latéralement le long du moteur (10).
